(19) **Europäisches Patentamt**

**European Patent Office**

**Office européen des brevets**

(11) **EP 0 877 354 B1**

(12) **EUROPÄISCHE PATENTSCHRIFT**

(45) Veröffentlichungstag und Bekanntmachung des Hinweises auf die Patenterteilung:
**09.07.2003  Patentblatt 2003/28**

(51) Int Cl.⁷: **G10L 15/02**

(21) Anmeldenummer: **98107567.4**

(22) Anmeldetag: **23.04.1998**

(54) **Verfahren zur Spracherkennung durch einen Rechner**

Method of speech recognition using distance calculations

Procédé de reconaissance de la parole utilisant des calculs de distances

(84) Benannte Vertragsstaaten:
**DE FR GB IT**

(30) Priorität: **07.05.1997  DE 19719381**

(43) Veröffentlichungstag der Anmeldung:
**11.11.1998  Patentblatt 1998/46**

(73) Patentinhaber: **SIEMENS AKTIENGESELLSCHAFT**
**80333 München (DE)**

(72) Erfinder: **Hauenstein, Alfred, Dr.**
**80939 München (DE)**

(56) Entgegenhaltungen:
**EP-A- 0 755 046**

• **PAUL D B: "NEW DEVELOPMENTS IN THE LINCOLN STACK-DECODER BASED LARGE-VOCABULARY CSR SYSTEM" PROCEEDINGS OF THE INTERNATIONAL CONFERENCE ON ACOUSTICS, SPEECH, AND SIGNAL PROCESSING (ICASSP), DETROIT, MAY 9 - 12, 1995 SPEECH, Bd. 1, 9. Mai 1995, Seiten 45-48, XP000657926 INSTITUTE OF ELECTRICAL AND ELECTRONICS ENGINEERS**
• **SCIARRA D ET AL: "TWO-STEP RECOGNITION OF LARGE VOCABULARY ISOLATED WORDS BASED ON DIPHONE SPOTTING" PROCEEDINGS OF THE EUROPEAN CONFERENCE ON SPEECH COMMUNICATION AND TECHNOLOGY (EUROSPEECH), PARIS, SEPT. 26 - 28, 1989, Bd. 2, Nr. CONF. 1, 1. September 1989, Seiten 164-167, XP000209982 TUBACH J P;MARIANI J J**
• **AUBERT X L: "FAST LOOK-AHEAD PRUNING STRATEGIES IN CONTINUOUS SPEECH RECOGNITION" SPEECH PROCESSING 1, GLASGOW, MAY 23 - 26, 1989, Bd. 1, Nr. CONF. 14, 23. Mai 1989, Seiten 659-662, XP000089809 INSTITUTE OF ELECTRICAL AND ELECTRONICS ENGINEERS**

**Beschreibung**

Die Erfindung betrifft ein Verfahren zur Spracherkennung durch einen Rechner.

Spracherkennung beginnt bei der Erfassung eines Sprachsignals in Form einer Abtastung und Digitalisierung. Es folgt eine Merkmalsextraktion (Vorverarbeitung) und eine Klassifikation (auch: Distanzberechnung) des vorverarbeiteten Sprachsignals. Im letzten Schritt der Spracherkennung (Suche) werden Wortmodelle zugeordnet, es ergibt sich eine erkannte Wortsequenz (siehe [1]).

Die Distanzberechnung stellt den rechenintensivsten Schritt bei der Spracherkennung dar. Je nach Anwendungsfall kann dabei der Anteil der benötigten Rechenleistung für die Distanzberechnung bis zu über 80% des gesamten Berechnungsaufwands des Spracherkenners betragen.

In [2] ist ein Verfahren zur Distanzberechnung genannt, das gegenüber der Erfindung den Nachteil aufweist, daß statistische Cluster entsprechend statistischer Verteilungen angeordnet sind, somit die Güte der Spracherkennung direkt von der Anzahl der Cluster abhängt und der Berechnungsaufwand hoch ist.

Aus [3] sind Hidden-Markov-Modelle (HMMs) zur Laut- und Wortmodellierung bekannt. Weiterhin sind in [4] kontinuierliche mehrdimensionale, meist multivariate, Verteilungen (z.B. Laplace- oder Gauß-Verteilungen) für die Modellierung der Merkmale implementiert.

Die Druckschrift "New Developments in the Lincoln Stach-Decoder Based Large-Vocabulary CSR System" (Douglas B.Paul, Proceeding of ICASSP 1995, Detroit, Bd. 1, Seiten 45-48) offenbart ein Verfahren zur Distanzberechnung, bei dem im "fast match" unter Verwendung von Diphonen Wortkandidaten ermittelt werden, aus denen in "delasted match" unter Verwendung von Triphonen Hypothesen generiert werden.

Die Aufgabe der Erfindung besteht darin, ein Verfahren zur Distanzberechnung anzugeben, das eine schnelle Klassifikation eines Merkmalsvektors (mit vorgebbarer Genauigkeit) ermöglicht.

Diese Aufgabe wird gemäß den Merkmalen des Patentanspruchs 1 gelöst.

Zu diskreten Abtastzeitpunkten wird ein Sprachsignal mit einer vorgebbaren Taktrate abgetastet und digitalisiert. Zu jedem Abtastzeitpunkt wird das Sprachsignal in einen Merkmalsvektor mit vorgebbarer Dimension abgebildet. Zur Durchführung der Distanzberechnung werden Abstände des jeweiligen Merkmalsvektors zu vorgebbaren Mustervektoren bestimmt.

Die Mustervektoren stellen unterscheidbare Lauteinheiten der Sprache dar. Jede Lauteinheit verfügt über einen Kontextgrad, der angibt, wie weit der Kontext der Lauteinheit reicht.

Zunächst wird zu ersten Mustervektoren, die Lauteinheiten mit einem vorgebbaren ersten Kontextgrad darstellen, jeweils ein Abstand zu dem Merkmalsvektor berechnet. Aus all den so berechneten ersten Abständen wird ein erstes Minimum der ersten Abstände ausgewählt.

Um eine genauere Klassifikation des Merkmalsvektors vornehmen zu können, werden in einem nächsten Schritt zweite Mustervektoren, die Lauteinheiten mit einem zweiten Kontextgrad darstellen, wobei der zweite Kontextgrad größer als der erste Kontextgrad ist, innerhalb eines vorgebbaren Bereichs um die durch das erste Minimum klassifizierte Lauteinheit zur Berechnung von zweiten Abständen herangezogen. Ein zweites Minimum der zweiten Abstände klassifiziert eine Lauteinheit mit einem gegenüber der zu dem ersten Minimum gehörenden Lauteinheit höherem Kontextgrad.

Reicht die Güte der durchgeführten Klassifikation des Merkmalsvektors aus, so kann das Verfahren beendet werden, indem Sprache aus klassifizierten Lauteinheiten zusammengesetzt und somit erkannt wird.

Soll eine genauere Klassifikation erfolgen, so wird nochmals der Kontextgrad der zu untersuchenden Lauteinheiten erhöht, und somit in einem vorgebbaren Bereich um die zuletzt das zuletzt klassifizierte Minimum Abstände zu dem Merkmalsvektor berechnet. Diese Iteration kann beliebig oft wiederholt werden, um ein immer besseres Ergebnis zu erhalten. Allerdings genügt eine Klassifikation mit hohem Kontextgrad nicht mehr der Förderung nach einer Echtzeitbedingung, da die Erhöhung des Kontextgrads den Aufwand für die Berechnung der Klassifikation typischerweise exponentiell ansteigen läßt.

Eine Weiterbildung des erfindungsgemäßen Verfahrens besteht darin, bei Verwendung von Lauteinheiten mit höherem Kontextgrad den nächsthöheren Kontextgrad auszuwählen.

Die Erfindung kann dahingehend weitergebildet werden, daß zu Beginn des Verfahrens Lauteinheiten mit dem Kontextgrad "1" verwendet werden.

Weiterhin können als solche Lauteinheiten zu Beginn des erfindungsgemäßen Verfahrens Phoneme oder Monophone einer Sprache verwendet werden.

Eine andere Weiterbildung der Erfindung besteht darin, Diphone oder Triphone oder aus mehreren Phonemen zusammengesetzte Laute als Lauteinheiten zu verwenden.

In den Figuren sind Ausführungsbeispiele der Erfindung dargestellt, die im weiteren näher erläutert werden.

Es zeigen

Fig.1  ein Blockdiagramm, das Schritte des erfindungsgemäßen Verfahrens enthält,

Fig.2    eine Skizze, die die Erfindung im zweidimensionalen Merkmalsraum veranschaulicht.

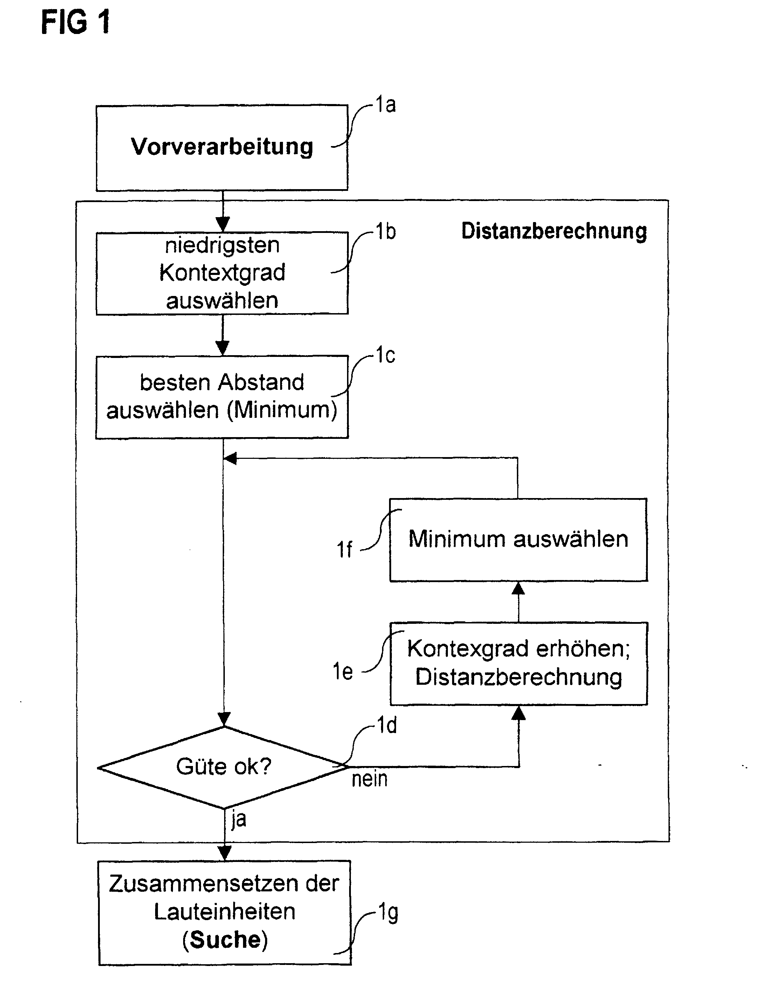

In Fig.1 werden Schritte des erfindungsgemäßen Verfahrens für die Berechnung der Distanz einer Untereinheit dargestellt.

Vektoren werden nachfolgend als kleine fettgedruckte Zeichen oder mit einem Pfeil, Matrizen als große fettgedruckte Zeichen dargestellt.

Gesprochene Sprache wird abgetastet und in digitalisierter Form einem Rechner zugänglich gemacht. In Schritt 1a, der Vorverarbeitung, wird demzufolge in regelmäßigen Abstand (z.B. alle 10ms) ein Merkmalsvektor **x**, der das aktuelle Sprachsignal repräsentiert, der Dimension $D_x$ (typische Werte für die Dimension: 20-64) ermittelt.

Wörter werden aus Einheiten modelliert, die eine Abfolge von Zuständen in einem Hidden-Markov-Modell (siehe ausführliche Beschreibung in [3]) darstellen. Solche Einheiten sind zumeist Phoneme, es können aber auch Halbsilben, Silben oder andere Einheiten verwendet werden. Eine Gesamtanzahl von Untereinheiten $N_u$, die die kleinsten sich unterscheidenden Einheiten von Sprache darstellen, schwankt je nach System und gewünschter Applikation (z.B. Einzelworterkennung, kontinuierliche Sprache, Sprecherunabhängigkeit) zwischen weniger als 100 und mehreren 1000 Untereinheiten $N_u$.

Bei der Distanzberechnung (siehe Fig.1, Schritte 1b bis 1f) geht es darum, für alle Untereinheiten $N_u$ *akustische Distanzen* gemäß einer verwendeten modellierenden Verteilung zu berechnen. Für jede Untereinheit u werden $N_v(u)$ Verteilungen zur Modellierung benutzt, wobei sich $N_v(u)$ für jede Untereinheit u unterscheiden kann. Typische Werte für $N_v(u)$ liegen zwischen 1 und 100. Bei Verwendung von Gauß-Verteilungen werden diese dargestellt als

$$g_j = G(\bar{\mu}_j, C_j) \tag{1},$$

wobei $\bar{\mu}_j$ der $D_x$-dimensionale Mittelpunktsvektor und **C** die $D_x$-dimensionale Kovarianzmatrix der mit j indizierten GaußVerteilung $g_j$ bezeichnen.

Die Gesamtverteilung für eine Untereinheit u (Summe der Gauß-Verteilungen) wird dargestellt durch $g_u$. Es handelt sich dabei um die mit $c_j$ gewichtete Summe der einzelnen Verteilungen:

$$g_u = \sum_{j=1}^{N_j(u)} c_j \times g_j \tag{2}.$$

Es ist üblich, von diagonalen Kovarianzmatrizen der Gaußverteilungen auszugehen. $\sigma_{i,j}$ bezeichnet dann die i-te Komponente der Varianz der Verteilung j. Die Wahrscheinlichkeit dafür, daß eine bestimmte Untereinheit u aufgetreten ist, wenn der beobachtete Merkmalsvektor **x** vorliegt, berechnet sich zu:

$$p_u(\mathbf{x}) = k \times \sum_{j=1}^{N_v(u)} \frac{c_j}{\prod_{i=1}^{D_x} \sigma_{j,i}} \times \exp\left(-\frac{1}{2} \times \sum_{i=1}^{D_x} \frac{(x_i - \bar{\mu}_{j,i})^2}{\sigma_{j,i}^2}\right) \tag{3},$$

wobei k eine vorgebbare implementierungsabhängige Konstante ist.

Eine verwendete Näherung geht davon aus, daß die Wahrscheinlichkeit einer Untereinheit u von der Wahrscheinlichkeit der "besten" (=wahrscheinlichsten) Verteilung dominiert wird. Dies bedeutet, daß in Gleichung (3) die äußere Summe durch einen max-Operator ersetzt werden kann. Es ist aber immer noch die Berechnung der Wahrscheinlichkeiten aller Verteilungen notwendig, denn erst dann kann der max-Operator ausgewertet werden:

$$p_u(\mathbf{x}) = \max_j \left\{ k \times \frac{c_j}{\prod\limits_{i=1}^{D_x} \sigma_{j,i}} \times \exp\left( -\frac{1}{2} \times \sum_{i=1}^{D_x} \frac{\left(x_i - \mu_{j,i}\right)^2}{\sigma_{j,i}^2} \right) \right\}$$

$$\forall\left(j \in \{1, \dots, N_v(u)\}\right)$$

$(4).$

Um die Berechnung des komplexen Terms in Gleichung (4) zu umgehen, wird Gleichung (4) logarithmiert, man spricht dann von *Distanzen* anstelle von Wahrscheinlichkeiten und bezeichnet diese Distanzen mit $d_u(\mathbf{x})$. Nach Umformen ergibt sich folgende Gleichung zur Berechnung der Distanz der akustischen Untereinheit u bei Vorliegen des betrachteten Merkmalsvektors $\mathbf{x}$:

$$d_u(\mathbf{x}) = \min_j \left\{ K_{1,j} + K_{2,j} \times \sum_{i=1}^{D_x} \left(x_i - \mu_{j,i}\right)^2 \right\}$$

$(5),$

$$\forall\left(j \in \{1, \dots, N_v(u)\}\right)$$

wobei $K_{1,j}$ und $K_{2,j}$ von der Realisierung abhängige vorgebbare Konstanten darstellen, die einmal im Voraus berechnet werden können.

Ähnliche Berechnungsschemata ergeben sich auch bei Verwendung anderer Verteilungen, z.B. der Laplace-Verteilung, und schränken das erfindungsgemäße Verfahren nicht auf die ausgeführte Verteilungsvariante ein.

Gleichung (5) wird für alle Untereinheiten u ausgewertet. Die Gesamtzahl aller Verteilungen im System für alle Untereinheiten u sei $N_v$ und berechnet sich zu

$$N_v = \sum_{k=1}^{N_u} N_v(k)$$

$(6).$

Das bedeutet, daß alle 10ms (alle 10ms wird ein Merkmalsvektor erstellt) $N_v$-mal ein $D_x$-dimensionaler Abstand berechnet wird, wobei $N_v$ bei Systemen typischerweise im Bereich 1000-500000 liegt. Diese Berechnung kann heutzutage von einem handelsüblichen Rechner (PC, Workstation, Signalprozessor) nicht unter Einhaltung der Echtzeitbedingung durchgeführt werden.

Das erfindungsgemäße Verfahren zeichnet sich dadurch aus, daß phonetisches Wissen zur Bestimmung einer Untermenge von Repräsentanten herangezogen wird. Es findet ein direktes Clustering von Untereinheiten statt.

Die Erfindung verwendet als ein primäres Kriterium zur Ermittlung einer geeigneten Untermenge zu berechnender Distanzen das Wissen um den phonetischen Kontext der modellierten (Sprach-)Segmente bzw. Untereinheiten.

Zur Erläuterung des erfindungsgemäßen Verfahrens wird von der Verwendung von Phonemen als Basis-Lauteinheiten für die Spracherkennung ausgegangen. Das Verfahren ist jedoch auch für andere Lauteinheiten als Phoneme realisierbar.

Ein typisches Spracherkennungssystem enthält ca. 40-60 Basis-Lauteinheiten. Bei solchen Basis-Lauteinheiten handelt es sich um kontextunabhängige Lauteinheiten. Um Sprache genauer klassifizieren zu können, werden Basis-Lauteinheiten in Abhängigkeit der vorangehenden und nachfolgenden Basis-Lauteinheiten gebildet.

Heutzutage werden Diphone, d.h. zwei Phoneme bestimmen die Untereinheit (ein Nachbarphonem wird zur Kontextbildung herangezogen), Triphone, d.h. drei Phoneme bestimmen die Untereinheit und Quinphone, d.h. fünf Phoneme bestimmen die Untereinheit, verwendet.

Kontext-abhängige Lauteinheiten werden wie folgt notiert:

$$L_i(i - 1, ..., i - 1|, i + 1, ... i + r) \tag{7},$$

wobei i einen Zentrallaut markiert, bei dem l Laute im vorangehenden (=linken) Kontext und r Laute im nachfolgenden (=rechten) Kontext zur Bestimmung der Untereinheit berücksichtigt werden. Es liegt demnach ein (l+r+1)-Laut vor.

Durch diese hier beschriebene Modellierung kann sich die Anzahl der Lauteinheiten mit höherem Kontextgrad, in Abhängigkeit der jeweiligen Anwendung auf mehrere 1000 erhöhen, da die Anzahl der verschiedenen theoretisch möglichen Lauteinheiten mit der Potenz der berücksichtigten Kontextlänge wächst.

Neben den kontext-abhängigen Lauteinheiten werden zusätzlich kontext-unabhängige Lauteinheiten (=Basis-Lauteinheiten) implementiert. Diese Basis-Lauteinheiten dienen bei "fastlook-ahead"-Methoden zur schnellen Vorauswahl von Hypothesen in der Suche nach einer Klassifikation eines Merkmalsvektors oder werden zur Modellierung von Wörtern herangezogen, wenn während einer Trainingsphase des Spracherkennungssystems zu wenige Ergebnisse vorlagen, um modellierende Verteilungen nach Gleichung (2) für die detaillierten Untereinheiten (im weiteren Kontext) zu bestimmen.

Für alle Lauteinheiten (Untereinheiten u) wird ein Kontextgrad $G_K$ bestimmt, der angibt, wie weit der Kontext der jeweiligen Lauteinheit reicht. Für Basis-Lauteinheiten (kontextunabhängige Untereinheiten) gilt $G_K$=1, für Diphone gilt $G_K$=2, für Triphone gilt $G_K$=3, usw. Für kontextabhängige Lauteinheiten gilt gemäß Gleichung (7) für den Kontextgrad

$$G_K = l + r + 1 \tag{8}.$$

In der Erfindung wird zur Entscheidung, ob die Distanz einer Lauteinheit genauer (in einem höheren Detaillierungsgrad) berechnet werden soll, die Distanz der gleichen Lauteinheit im kleineren Kontextgrad (=abstrakteren Kontext) herangezogen. Das bedeutet, daß zur Entscheidung, ob die Distanz für die Lauteinheit

$$L_i(i - l, ..., i - 1|, i + 1, ... i + r)$$

explizit berechnet wird, die Distanz für einen abstrakteren Laut

$$L_{abs}(i - l_2, ..., i - 1|, i + 1, ... i + r_2)$$

herangezogen wird, wobei gilt $l_2 < l$, $r_2 < r$. Der Vorteil liegt darin, daß für alle $L_i(...)$, bei denen $l_2 < l$, $r_2 < r$ gilt, die Distanz der gleichen abstrakten Untereinheit $L_{abs}$ zur Entscheidung verwendet werden kann. Demzufolge wird bei der Wahl der abstrakten Lauteinheit bis auf die Basis-Lauteinheiten zurückgegriffen, für die gilt l=r=0.

Sodann wird die optimale Distanz $d_{opt}$ aus allen Distanzen der abstrakten Lauteinheiten berechnet (siehe Fig.1, Schritt 1c):

$$d_{opt} = \min_j\{d_{abs,i}\} \qquad \forall (i \in \{1, ..., N_{U,abs}\}) \tag{9},$$

wobei $N_{U,abs}$ eine Anzahl der abstrakten Lauteinheiten bezeichnet und $N_{abs}$ die Anzahl der Verteilungen, die die $N_{U,abs}$ abstrakten Lauteinheiten modelliert, bezeichnet.

Im Schritt le werden für Lauteinheiten mit höherem Kontextgrad die Distanzen explizit berechnet, wobei die Bedingung

$$d_{u,abs} < d_{opt} + thr \tag{10}$$

vorschreibt, daß innerhalb eines vorgebbaren Bereichs (gekennzeichnet durch den vorgebbaren Wert thr) um das nach Gleichung (9) errechnet Minimum $d_{opt}$ abstrakte Lauteinheiten $d_{u,abs}$ zu einer detaillierteren Klassifizierung des Merkmalsvektors herangezogen werden (Schritt 1d).

Für den vorgebbaren Wert thr kann gelten: thr=const, d.h. es wird eine Konstante durch Vorberechnung bestimmt, oder der Wert thr wird implizit abhängig von dem augenblicklichen Merkmalsvektor **x** ausgewählt gemäß

$$thr = K_{thr} \times d_{opt} \tag{11},$$

wobei $K_{thr}$ ein vorgebbarer Wert ist.

Für alle Lauteinheiten, deren Distanz der abstrakten Lauteinheit nach Gleichung (11) nicht innerhalb des durch den Wert thr vorgebbaren Bereichs liegt, d.h. deren Distanz zu groß ist, wird gesetzt:

$$d(L_i(i-l, ..., i - 1|, i + l, ... i + r)) = d(L_{abs}) \tag{12}.$$

Somit wird die Distanz der abstrakten Untereinheit gewählt, wodurch die explizite Berechnung der Distanz eingespart wird.

Die Anzahl der explizit zu berechnenden Verteilungen wird mit $N_t$ bezeichnet, wobei $N_t \leq N_V$ gilt. Werden nun abstrakte Lauteinheiten zur Entscheidungsfindung nach Gleichung (10) ausgewählt, die gleichzeitig Teil des Spracherkennungssystems sind, wie bspw. die Basis-Lauteinheiten, sind die Verteilungen der abstrakten Lauteinheiten $N_{abs}$ eine Teilmenge der modellierenden Verteilungen

$$N_{abs} \subseteq N_V \tag{13}.$$

Somit gilt:

$$N_{ges} = N_{abs} + N_t \leq N_V \tag{14}.$$

Auf diese Weise ist immer sichergestellt, daß nie mehr Verteilungen berechnet werden müssen, als das eigentliche System beinhaltet, da die zur Entscheidung herangezogenen Lauteinheiten bzw. Verteilungen Teil des Systems sind.

Gemäß obiger Beschreibung wird also innerhalb des durch den Wert thr vorgegebenen Bereichs wiederum ein Minimum der Abstände $d_{opt}$ ermittelt (Schritt 1f) und, wenn die Güte der Klassifikation ausreicht (Schritt 1d), das Verfahren beendet, indem Lauteinheiten zusammengesetzt werden (Schritt 1g) und somit Sprache erkannt wird. Ist hingegen die Güte der Klassifikation noch nicht ausreichend, so wird zu Schritt le gesprungen und das Verfahren iteriert.

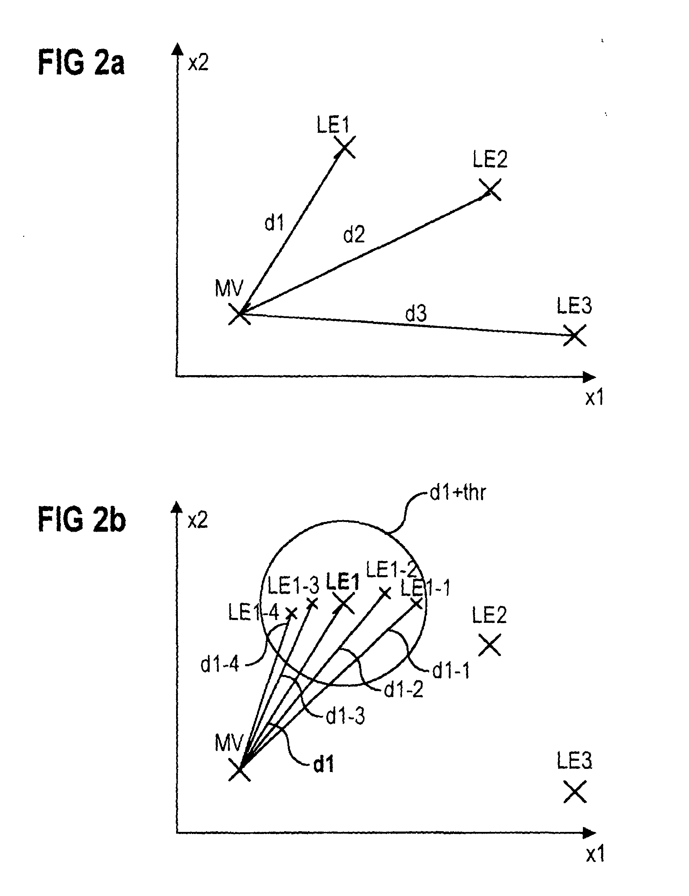

In Fig.2 wird beispielhaft die Klassifikation im zweidimensionalen Merkmalsraum (x1, x2) veranschaulicht. In Fig.2a sind ein Merkmalsvektor MV, und drei Lauteinheiten LE1, LE2 und LE3 mit demselben Kontextgrad dargestellt. Zu jeder Lauteinheit LE1, LE2 und LE3 wird jeweils eine Distanz d1, d2 und d3 berechnet. Das Minimum aus den Distanzen, hier der Abstand d1, wird gemäß Gleichung (9) ausgewählt.

In Fig.2b wird um das ausgewählte Minimum ein vorgebbarer Bereich gemäß Gleichung (10), gekennzeichnet durch d1+thr, bestimmt. Im Beispiel liegen außer der Lauteinheit LE1 noch weitere Lauteinheiten LE1-1, LE1-2, LE1-3 und LE1-4 mit gegenüber Lauteinheit LE1 höherem Kontextgrad innerhalb dieses vorgebbaren Bereichs. Für jede dieser Lauceinheiten LE1-1, LE1-2, LE1-3 und LE1-4 wird jeweils die Distanz berechnet. Aus den resultierenden Distanzen d1-1, d1-2, d1-3 und d1-4 wird das Minimum berechnet (wieder nach Gleichung (9)). Das Verfahren kann fortgesetzt iteriert werden, indem um das ausgewählte Minimum d1-4 wieder ein vorgebbarer Bereich bestimmt wird und innerhalb dieses Bereichs Distanzen zu Lauteinheiten mit höherem Kontextgrad als die Lauteinheit LE1-4 berechnet werden.

Literatur:

[1] G. Ruske: Automatische Spracherkennung: Methoden der Klassifikation und Merkmalsextraktion. Oldenbourg, München 1988, ISBN 3-486-20877-2, S.1-10.

[2] Enrico Bocchieri: Vector Quantization for the Efficient Computation of Continuous Density Likelihoods, Proc.

IEEE International Conference of Acoustics, Speech and Signal Processing (ICASSP), S.II-692 bis II-695.

[3] L. R. Rabiner: A Tutorial on Hidden Markov Models ans Selected Applications in Speech Recognition, Proc. IEEE, Feb.1989, S.257-286.

[4] L. R. Rabiner, B.-H. Juang, S. E. Levinson, M. M. Sondhi: Recognition of Isolated Digits Using Hidden Markov Models with Continuous Mixture Densities, AT&T Technical Journal, Vol.64, No.6, July-August 1985, S.1211-1234.

**Patentansprüche**

1. Verfahren zur Spracherkennung durch einen Rechner,

a) bei dem ein Sprachsignal mit einer vorgebbaren Taktrate digitalisiert wird,
b) bei dem das digitalisierte Sprachsignal zu je einem Abtastzeitpunkt, der durch die Taktrate festgelegt ist, in einen Merkmalsvektor abgebildet wird,
c) bei dem erste Abstände des Merkmalsvektors zu ersten Mustervektoren ermittelt werden, wobei die Mustervektoren jeweils eine kleinste unterscheidbare Lauteinheit mit einem vorgebbaren Kontextgrad, der angibt, wie weit der Kontext einer Lauteinheit reicht, darstellen,
d) bei dem ein erstes Minimum der ersten Abstände ausgewählt wird,
e) bei dem um das erste Minimum ein vorgebbarer Bereich ausgewählt wird und in diesem Bereich zweite Abstände des Merkmalsvektors von zweiten Mustervektoren, die jeweils Lauteinheiten mit gegenüber den kleinsten unterscheidbaren Lauteinheiten höherem Kontextgrad darstellen, bestimmt werden,
f) bei dem ein zweites Minimum der zweiten Abstände ausgewählt wird,
g) bei dem eine Enbcheidun getroffen wird ob der Merkmalsvektor durch die über das zweite Minimum erreichbare Lauteinheit klassifiziert wird oder, falls eine genauerer Klassifikation erforderlich ist, das zweite Minimum als das erste Minimum angenommen und mit Schritt e) fortgefahren wird,
h) bei dem aus zusammengesetzten klassifizierten Lauteinheiten Sprache erkannt wird.

2. Verfahren nach Anspruch 1,

bei dem im Schritt e) für die zweiten Mustervektoren der nächsthöhere Kontextgrad gegenüber den ersten Mustervektoren ausgewählt wird.

3. Verfahren nach Anspruch 1 oder 2,

bei dem die ersten Mustervektoren kontextunabhängige Einheiten mit dem Kontextgrad 1 darstellen.

4. Verfahren nach einem der Ansprüche 1 bis 3,

bei dem als Mustervektoren Phoneme einer Sprache verwendet werden.

5. Verfahren nach einem der Ansprüche 1 bis 3,

bei dem als Mustervektoren Triphone einer Sprache verwendet werden.

6. Verfahren nach einem der Ansprüche 1 bis 3,

bei dem als Mustervektoren Quinphone einer Sprache verwendet werden.

**Claims**

1. Speech recognition method by means of a computer,

a) in which a speech signal is digitized with a predefinable clock rate,
b) in which the digitized speech signal is mapped into a feature vector that, in each case, one sampling time which is defined by the clock rate,

**EP 0 877 354 B1**

c) in which first distances between the feature vector and first pattern vectors are determined, the pattern vectors each representing a smallest distinguishable sound unit with a predefinable degree of context, which indicates how far the context of a sound unit extends,

d) in which a first minimum of the first distances is selected,

e) in which a predefinable range around the first minimum is selected and second distances between the feature vector and second pattern vectors which each represent a sound unit with a higher degree of context in comparison with the smallest distinguishable sound unit are determined in this range,

f) in which a second minimum of the second distances is selected,

g) in which a [illegible] is taken to determine whether the feature vector is classified by the sound unit which can be obtained by means of the second minimum, or if a more precise classification is necessary, the second minimum is adopted as the first minimum and step e) is continued,

h) in which language is detected from combined classified sound units.

2. Method according to Claim 1, in which, in step e), the next highest degree of context in comparison with the first pattern vectors is selected for the second pattern vectors.

3. Method according to Claim 1 or 2, in which the first pattern vectors represent context-independent units with the degree of context 1.

4. Method according to one of Claims 1 to 3, in which phonemes of a language are used as pattern vectors.

5. Method according to one of Claims 1 to 3, in which triphones of a language are used as pattern vectors.

6. Method according to one of Claims 1 to 3, in which quinphones of a language are used as pattern vectors.

**Revendications**

1. Procédé de reconnaissance de la parole par un ordinateur,

a) dans lequel un signal vocal avec une fréquence d'horloge pouvant être prédéfinie est numérisé,

b) dans lequel le signal vocal numérisé à chaque instant d'échantillonnage qui est fixé par la fréquence d'horloge, est représenté dans un vecteur de caractéristique,

c) dans lequel des premiers écarts du vecteur de caractéristique aux premiers vecteurs de modèle sont déterminés, les vecteurs de modèle représentant à chaque fois une unité sonore, la plus petite, différentiable avec un degré de contexte pouvant être prédéfini qui indique quelle distance atteint le contexte d'une unité sonore,

d) dans lequel un premier minimum des premiers écarts est sélectionné,

e) dans lequel une zone pouvant être prédéfinie est sélectionnée autour du premier minimum et dans cette zone des deuxièmes écarts du vecteur de caractéristique sont déterminés par des deuxièmes vecteurs de modèle qui représentent à chaque fois des unités sonores avec un degré de contexte plus élevé par rapport aux unités sonores différentiables les plus petites,

f) dans lequel un deuxième minimum des deuxièmes écarts est sélectionné,

g) dans lequel une décision est prise si le vecteur de caractéristique est classé par l'unité sonore pouvant être atteinte par le deuxième minimum ou, si une classification plus exacte est nécessaire, le deuxième minimum est accepté comme premier minimum et poursuivi avec l'étape e),

h) dans lequel une langue est reconnue à partir des unités sonores classées assemblées.

2. Procédé selon la revendication 1, dans lequel à l'étape e) pour les deuxièmes vecteurs de modèle le degré de contexte le plus élevé suivant est sélectionné par rapport aux premiers vecteurs de modèle.

3. Procédé selon la revendication 1 ou 2, dans lequel les premiers vecteurs de modèle représentent des unités indépendantes du contexte avec le degré de contexte 1.

4. Procédé selon l'une des revendications 1 à 3, dans lequel des phonèmes d'une langue sont utilisés comme vecteurs de modèle.

5. Procédé selon l'une des revendications 1 à 3, dans lequel des triphones d'une langue sont utilisés comme vecteurs de modèle.

**6.** Procédé selon l'une des revendications 1 à 3, dans lequel des quinphones d'une langue sont utilisés comme vecteurs de modèle.

# FIG 1

```
┌─────────────────────┐ ─1a
│   Vorverarbeitung   │
└─────────────────────┘
           │
           ▼                                    Distanzberechnung
┌─────────────────────┐ ─1b
│     niedrigsten     │
│     Kontextgrad     │
│     auswählen       │
└─────────────────────┘
           │
           ▼
┌─────────────────────┐ ─1c
│   besten Abstand    │
│ auswählen (Minimum) │
└─────────────────────┘

                        ┌──────────────────────────┐
                   1f ─ │   Minimum auswählen      │
                        └──────────────────────────┘
                                    ▲
                        ┌──────────────────────────┐
                   1e ─ │   Kontexgrad erhöhen;    │
                        │   Distanzberechnung      │
                        └──────────────────────────┘
                                    ▲
           ▼            ─1d
         ╱      ╲
        ╱ Güte   ╲ ──── nein
        ╲  ok?   ╱
         ╲      ╱
            │ ja
            ▼
┌─────────────────────┐
│ Zusammensetzen der  │
│    Lauteinheiten    │ ─1g
│     (Suche)         │
└─────────────────────┘
```

FIG 2a

FIG 2b